# EUROPEAN PATENT SPECIFICATION

(11) **EP 3 263 960 B1**
(45) Date of publication and mention of the grant of the patent: **30.01.2019**
(21) Application number: 17174942.7
(22) Date of filing: 08.06.2017
(51) Int. Cl.: F16K 15/03

(54) **DUAL PLATE SWING CHECK VALVE**
DOPPELPLATTENRÜCKSCHLAGVENTIL
SOUPAPE DE RETENUE OSCILLANTE À DOUBLE PLAQUE

(30) Priority: 24.06.2016 ES 201630866
(43) Date of publication of application: 03.01.2018
(73) Proprietor: Castflow Valves, S.L., 28970 Humanes de Madrid-Madrid (ES)
(72) Inventor: GALLEGO GALLARDO, Yolanda, 28970 HUMANES DE MADRID-MADRID (ES)
(74) Representative: Urizar Anasagasti, Jesus Maria

(56) References cited:
- CN-A- 104 948 783
- US-A1- 2013 019 966

## Description

### Object of the invention

The invention relates to a check valve, specifically to double flap check valves, or swing plate, both articulated around a central shaft.

This is the type of valve in which the body is not perforated on the outside, also known in some cases as a retainerless system. To this effect, the body of the valve has two positioners, diametrically opposed on the inside thereof, each of which has two blind holes, in which are housed, on one portion, the rotation shaft of the valve plates and, on the other, a stop shaft, which is mounted in a blind hole and in another one that is through and threaded which has a double function: on one hand to limit the opening of the plates and ensure that the opening is symmetrical and that they do not rotate, and on the other hand, so that they act as a system for fastening the positioners to the body of the valve, by means of pressure against the body.

On the one hand, this system does not require the perforations on the outside of the body, preventing the leakage thereof and, on the other hand, the fastening system eliminates auxiliary elements such as screws, nuts, plates, etc. as have been made until now.

### Background of the invention

Check valves, also known as non-return valves, have been used for a long time in tubing in order to prevent the fluid from being displaced in the direction opposite of that required. Among the diverse models of existing check valves, the double plate model prevails since it offers a quick response to water hammers since it has springs that assist at the beginning of the sealing and due to the configuration, they are considered fast sealing. This type of valve has corresponding articulated plates around a central shaft, which are mounted on the inside of the valve body, initially through bolts that were introduced from the outside and currently are by means of corresponding lateral positioners, introduced into slots made in the valve body, which are attached into it by threaded means. A stop is located on top of these plates, made up of a longitudinal element, parallel and in the same diametrical plane as the rotation shaft of the plates, or by existing bulges in the upper face of said plates that prevent these from being located completely annexed in the opening position; in any of the cases, the absence of perforations in the body on the outside prevents leakage through them, for which reason the current art advances in this direction.

In the patent literature, there are many documents referring to this type of valve, among all of which, we have only reviewed those in which the shaft of the plates is mounted in lateral spacers inside the valve body, since this valve is of this type. For example, in the document US5246032 the spacers in which the shaft and the stop are mounted have corresponding bores 54 on the bottom through which the fastening thereof in the base of the valve body is carried out, in which there are also no slots for housing said positioners, for which reason the sealing plates have a smaller diameter than the inner body of the valve. In the document DE102007057663, the fastening of the spacers in which the shaft of the plates is mounted is also carried out in the base of the valve body.

In the document US 5819790, the retention of the positioners 12 is carried out by means of a pair of plates 14, which stay in position in the slots 15 by means of retaining screws 16, that thread in a direction axial to the valve body on each side of the body thereof. In the document US2013/0019966, the diametrical stop is fastened by means of bushings that define the immobilization point in the valve body. The fastening of the assembly is carried out by means of screws that thread in a direction axial to the valve body on each side thereof. In the document WO2008126097, the fastening is also carried out in a similar manner, through a plate 13 that immobilizes it by the face by which it connects to the tubing. The document CN202140632 also has a similar configuration in which the spacers 2 are fastened by means of plates 4 and screws 6 that protrude from the face by which it is connected to the tubing.

In the document CN202884136, the spacers do not fit in slots inside the valve body, but they are fastened in a piece 31 that in turn is fastened to the valve body forming the base thereof.

In the document CN 104948783 a positioner fastening system by means of an auxiliary piece (Fig. 3 and 4) is seen in which a single shaft is introduced with threaded portions above an auxiliary piece and with corresponding nuts that are fastened through an auxiliary piece to the valve body; said auxiliary piece having a flap to prevent it from going out in the direction of the fluid.

### Description of the invention

The present invention relates to a double plate check valve that offers a mounting that is more simple and has less pieces than any of the previous ones, which furthermore does not have any of the drawbacks commented in relation to the state of the art. The most notable aspect of this invention is the system of fastening the positioners to the valve body that is carried out by means of the same stop, without needing auxiliary elements, having in this way a double function.

The valve is made up of a cylindrical body provided with a central rib in which two semi-circular plates are held which carry out the sealing of the valve with help from springs. Said plates are mounted facing each other by the straight face in a common shaft upon which they rotate symmetrically, such that facilitate the establishment of the sealing of the valve by being supported against the valve seat of the valve body, while in the opening said plates adopt a V-shaped configuration in which the vertex is the rotation shaft and is located upstream in relation to the passage of the fluid. The shut-off of the passage of the fluid is performed when the flow of the installation upstream is reduced enough to start the sealing thereof until it is reduced to zero.

To carry out the circular sealing movement, these semi-circular plates are mounted in a central shaft that is housed in corresponding lateral positioners, which in turn are housed in the valve body, in diametrically opposed hollows, with the same shape as said positioners. According to an important characteristic of the invention, said positioners attach to the valve body by means of the same stop that delimits the opening of the valve, which once the assembly of the components of the valve is mounted inside the body thereof, it exerts a pressure on both positioners, tending to pressure them against the bottom of the corresponding hollows that sufficiently house them in order to keep the valve mounted until its installation in the tubing, which makes the dismantling of the actuation mechanism thereof completely impossible. Thus, it relates to a simple construction valve, since all kinds of auxiliary pieces for fastening the positioners are eliminated, using the stop shaft for the fastening thereof; furthermore, the valve body does not require bores on the outside of the valve for the mounting of the shafts, in this way preventing leakage to the outside, eliminating plugs and joints in order to ensure the seal to the outside.

This arrangement can also be used in the construction of valves coated in rubber on the inside, wherein the cavity of the housing of the positioners is coated in rubber and no part of the inside of the body will be in contact with the fluid. In this system there is no stress point. In this type of valve, the body is completely coated in rubber on the inside, with positioners that contain the rotation shaft, which are fastened like in the base design explained previously by means of the stops, preventing the fluid from coming into contact with the valve body.

The mounting and dismantling of the pieces that make up the valve is very simple and does not require help from any auxiliary elements, such as plates or screws; furthermore, the components are interchangeable, since both the plates of the valve, as well as the spacers, stop and springs are ambidextrous and can be used for any position.

This valve can work at high temperatures and with any type of fluids, including corrosive ones, all of the parts thereof being able to be made from materials that are resistant to corrosion, and furthermore, the fastening system of the positioners does not carry any type of joint and the configuration of the valve seat could be with metal-metal sealing.

It is also noteworthy that, once the positioners are fastened, they stay flushed with the face of the valve that is connected to the tubing, for which reason this face stays free of auxiliary elements such as plates or screws that could damage the seal in the mounting of the tubing of the valve.

### Description of the drawings

As a complement to the description being made, and for the purpose of helping to make the characteristics of the invention more readily understandable, this specification is accompanied by a set of drawings which, by way of illustration and not limitation, represent the following.
- Figure 1 shows a perspective of the preferred configuration of the valve with a diametrical cross section that shows all the components thereof and the inside thereof.

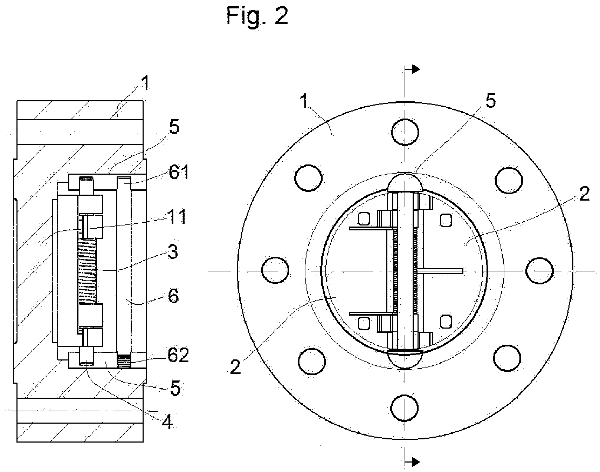

- Figure 2 shows a plan view and cross section of half of the valve, wherein the mechanization inside the body (1) can be seen.

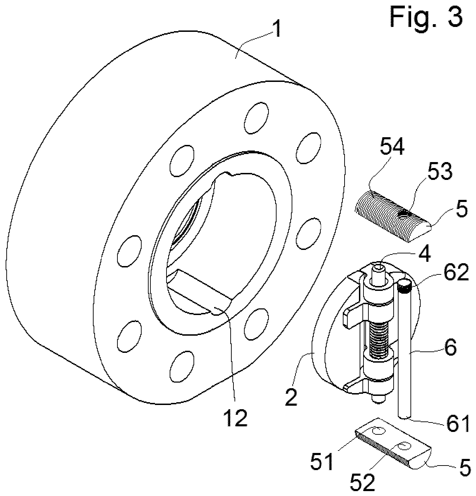

- Figure 3 is a perspective of the mechanized body (1) as well as the fastening system of the positioners (5), characteristic of the present invention.

### Preferred embodiment of the invention

The present invention consists of a double plate check valve with a configuration in which the body is not bored towards the outside, in order to ensure the seal of the valve. This valve, with dual plate and swing components, is made up of a cylindrical body and hollow (1), with a central rib (11) that divides the flow in two, in the inside of which the following elements are included that made up the actuation mechanism of the valve:
- Two semi-circular plates (2) the rotation shaft (4) of which is located aligned to and above the rib (11). These plates are placed forming a V-shaped configuration when opening by the effect of the pressure of the surrounding fluid, and are located in one same plane during the sealing, an operation which involves at least one spring (3) which closes said plates, preventing the passage of fluid when the flow upstream of the valve is reduced.
- The stop (6), located above said plates (2), forming a diametrical plane with the rib (11) and the rotation shaft (4) of the same, delimits the opening of the plates (2) and makes sure that the opening is symmetrical and that they do not rotate.
- Corresponding positioners (5), that in turn are housed in hollows (12) with the same shape thereof, made in the valve body (1) coinciding with the rotation line of the plates (2). In each of these positioners a first blind hole (51) is seen corresponding with the rotation shaft (4), which is held in both in the mounting of the assembly, and a second hole that in one of the positioners is blind (52) and in another through and threaded hole (53) through which the stop shaft (6) that delimits the opening of the plates (2) is fastened.

According to a particularity of the invention, the fastening of each of the positioners (5) is carried out in the wall of the bottom of the corresponding hollow (12) by means of a stop (6). To do so, the stop (6) has a smooth ending (61) and a threaded ending (62) through which the valve body (1) is immobilized, upon unscrewing the stop shaft (6) over the threaded hole (53) of one of the positioners (5) exerting the necessary pressure to fasten the assembly to the body (1).

The positioners (5) have a machined rough area (54) in order to ensure the fastening to the body (1) once the stop shaft (6) is completely unscrewed and for said positioners (5) to exert pressure on the hollows (12) of the body (1).

According to another characteristic of the invention, the positioners (5) that enable the fastening of the shaft (4) and the stop (6) of the valve have a cross-section configuration according to a circular segment, in which the curved area coincides with that of the hollows (12) made in the inside of the valve body (1) while the flat face is located perpendicular to the rotation shaft (4) of the plates (2). Likewise, the length of these positioners (5) corresponds to that of the hollows (12), such that once the positioners (5) are mounted they stay flushed with the face of the valve body on which the tubing is fastened. The absence of fastening elements in the connection faces of the tube and the simplicity in the fastening of the positioners (5) and the absence of joints allows this valve to be used at high temperatures, in the metal-metal sealing configuration thereof.

For the mounting of the shaft (4) both positioners (5) have a first hole (51), close to the inside end thereof; while for the mounting of the stop (6) and the immobilization of the device of the valve inside the body (1), it has been anticipated, on one hand, that one of the positioners (5), at the same length of the outside end, has a blind and smooth hole (52), while the other has a threaded hole (53). In turn, the stop shaft (6) has on one end a smooth ending (61) that couples in the hole (52) of the corresponding positioner (5), with certain clearance that enables the rotation of the stop shaft (6), once housed in the hole (52) and, on the opposite end, an ending (62) able to couple by screwing into the hole (53) of the other positioner (5).

With this configuration, the mounting system is very simple, the two plates facing each other (2) are placed, the bar of the rotation shaft (4) is introduced together with washers and springs (3), and subsequently the shaft (4) is introduced into the housing of each of the two positioners (5). Moreover, the stop (6) is screwed until the bottom of the hole (53) of the positioner and the other end (61) is introduced into the hole (52) of the other positioner and all of the assembly in this way is premounted in the housings (12) of the body (1) for the positioners (5). One introduced down to the bottom, it is fastened to the body (1) by means of the stop shaft (6), by unscrewing the end (62), the opposite end (61) propels the positioner of that side to be separated until both press against the hollows (12) of the valve body (1). Thus, this valve is easily mounted and dismantled and offers very secure fastening when transported, and much more once the valve is fastened in the tubing.

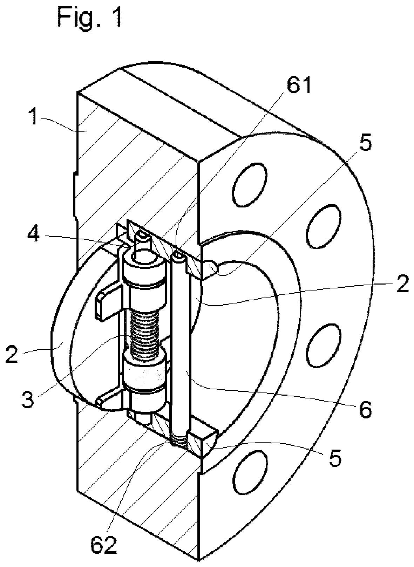

In figure 1, a lug-type configuration is shown, in which the valve is directly mounted on the flange of the tubing by means of screws that are screwed in directly over bores threaded in the same valve body, but in the case of being wafer-type, in other words when the valve is installed between the flanges of the tubing and stays fixed by the screws of the flanges, those areas will need to have necks in order to not weaken the thickness with said mechanization. With this configuration, the tube-mounting face stays free of auxiliary elements, such that it settles perfectly in the mounting in the tubing. Furthermore, in the mechanization process of the body the finish of the faces for connection to the tubing can be done with the positioners (5) fastened by the stop shaft (6) such that there are no discontinuities in the tubing connection face.

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below:

## Claims

1. A dual plate swing check valve made up of a cylindrical and hollow body (1) with a central rib (11) which divides the flow in two, the inside of which comprises:
- semi-circular plates (2), the rotation shaft (4) of which is located in line and above the rib (11), and which are located to form a V-shaped configuration when opening by the effect of the pressure of the surrounding fluid, and are located in one same plane during the sealing, an operation which involves at least one spring (3) which closes said plates, preventing the passage of fluid when the flow upstream of the valve is reduced;
- one stop (6), located above said plates, aligned with the rib (11) and the rotation shaft (4) of the same, delimiting the opening of the plates and making sure that the opening is symmetrical and that the plates do not rotate (2);
- corresponding positioners (5), which in turn are housed in hollows (12) with the same form as said positioners on the valve body (1), coinciding with the rotation line of the plates (2), which define a first hole (51) in correspondence with the rotation shaft (4), which is supported on both positioners, and a second hole (52, 53) in which the stop shaft (6) is fastened which delimits the opening of the plates (2);
**characterized in that** the fastening of each of the positioners (5) is carried out in the wall of the bottom of the corresponding hollow (12) by means of the pressure that the stop shaft (6) exerts, which has a smooth ending (61) on one end, and on the opposite end a threaded ending (62); while the positioners (5), at the same length of the outside end, one of them has a smooth and blind hole (52), while the other has a threaded hole (53), corresponding with the respective ends (61, 62) of the stop shaft (6), which has a length such that, with the end (62) screwed into the hole (53) of the corresponding positioner (5) and the opposite end (61) coupled in the blind hole (52) of the other positioner (5), the assembly of the device can enter into the valve body (1) by sliding, while upon slightly unscrewing the end (62) of the stop shaft (6), it exerts pressure on both positioners (5), pressing them against the corresponding hollows (12) of the valve body.

2. The dual plate swing check valve, according to claim 1, **characterized in that** the positioners (5) have a machined rough area (54) on the outer face, that stays in the contact area with the hollows (12), which ensures the fastening thereof to the body (1) when the stop shaft (6) is unscrewed and it presses the positioners (5) against the hollows of the body (1).

## Patentansprüche

1. Zweiplatten-Schwenkrückschlagventil, das aus einem zylindrischen und hohlen Körper (1) mit einer zentralen Rippe (11) besteht, die den Strom in zwei Teile teilt, deren Inneres folgendes umfasst:
- halbkreisförmige Platten (2), deren Rotationswelle (4) ausgerichtet und oberhalb der Rippe (11) angeordnet ist, und die beim Öffnen durch die Wirkung des Drucks des umgebenden Fluids eine V-förmige Konfiguration bilden und während der Abdichtung in der gleichen Ebene angeordnet sind, ein Vorgang, in dem mindestens eine Feder (3) vorgesehen ist, die diese Platten schließt, wobei der Durchtritt von Fluid verhindert wird, wenn der Strom stromaufwärts des Ventils reduziert wird;
- einen Anschlag (6), der über den Platten angeordnet ist und mit der Rippe (11) und der Rotationswelle (4) derselben ausgerichtet ist, wobei die Öffnung der Platten begrenzt wird und sichergestellt wird, dass die Öffnung symmetrisch ist und sich die Platten nicht drehen (2);
- entsprechende Stellungsregler (5), die wiederum in Hohlräumen (12) mit der gleichen Form wie die Stellungsregler am Ventilkörper (1) untergebracht sind, die mit der Rotationslinie der Platten (2) übereinstimmen, die eine erste Bohrung (51) entsprechend der Rotationswelle (4), die an beiden Stellungsreglern abgestützt ist, und eine zweite Bohrung (52, 53), in der die Anschlagswelle (6) befestigt ist, die die Öffnung der Platten (2) begrenzt, definieren;
**dadurch gekennzeichnet, dass** die Befestigung jedes der Stellungsregler (5) in der Wand des Bodens des entsprechenden Hohlraums (12) mittels des Drucks erfolgt, den die Anschlagwelle (6) ausübt, die an einem Ende ein glattes Ende (61) und am gegenüberliegenden Ende ein Gewindeende (62) aufweist; während die Stellungsregler (5), auf der gleichen Länge des äußeren Endes, eines von ihnen eine glatte Sackbohrung (52) aufweist, während das andere ein Gewindebohrung (53) aufweist, den jeweiligen Enden (61, 62) der Anschlagwelle (6) entsprechend, die eine solche Länge aufweist, dass wenn das Ende (62) in die Bohrung (53) des entsprechenden Stellungsreglers (5) eingeschraubt ist und das gegenüberliegende Ende (61) in die Sackbohrung (52) des anderen Stellungsreglers (5) gekoppelt ist, die Baugruppe der Vorrichtung durch Verschieben in das Ventilgehäuse (1) eintreten kann, während beim leichten Abschrauben des Endes (62) der Anschlagwelle (6) Druck auf beide Stellungsregler (5) ausgeübt wird, wobei diese gegen die entsprechenden Hohlräume (12) des Ventilgehäuses gedrückt werden.

2. Zweiplatten-Schwenkrückschlagventil nach Anspruch 1, **dadurch gekennzeichnet, dass** die Stellungsregler (5) einen bearbeiteten rauen Bereich (54) auf der Außenfläche aufweisen, der im Kontaktbereich mit den Hohlräumen (12) verbleibt, der deren Befestigung am Körper (1) beim Abschrauben der Anschlagwelle (6) gewährleistet und die Stellungsregler (5) gegen die Hohlräume des Körpers (1) drückt.

## Revendications

1. Clapet anti-retour oscillant à double battant constitué d'un corps cylindrique et creux (1) avec une rainure centrale (11) qui sépare le flux en deux, dont l'intérieur comprend :
- des battants semi-circulaires (2), dont l'arbre de rotation (4) est placé en ligne et au-dessus de la rainure (11), et qui sont placés pour former une configuration en forme de V lors de l'ouverture sous l'effet de la pression du fluide environnant, et qui sont placés sur un même plan pendant la fermeture, une opération qui implique au moins un ressort (3) qui ferme lesdits battants, empêchant le passage de fluide lorsque le flux en amont du clapet est réduit ;
- une butée (6), située au-dessus desdits battants, en alignement avec la rainure (11) et l'arbre de rotation (4) de cette dernière, délimitant l'ouverture des battants et garantissant que l'ouverture est symétrique et que les battants ne tournent pas (2) ;
- des positionneurs correspondants (5), qui sont à leur tour logés dans des creux (12) avec la même forme que lesdits positionneurs sur le corps du clapet (1), coïncidant avec la ligne de rotation des battants (2), qui définissent un premier trou (51) en correspondance avec l'arbre de rotation (4), qui est supporté sur les deux positionneurs, et un deuxième trou (52, 53) dans lequel l'arbre de butée (6) est serré qui délimite l'ouverture des battants (2) ;
**caractérisé en ce que** le serrage de chacun des positionneurs (5) est mis en oeuvre dans la paroi de la partie inférieure du creux correspondant (12) au moyen de la pression que l'arbre de butée (6) exerce, qui a une terminaison lisse (61) à une extrémité, et à l'extrémité opposée une terminaison filetée (62) ; tandis que les positionneurs (5), à la même longueur que l'extrémité extérieure, l'un d'eux a un trou lisse et borgne (52), tandis que l'autre a un trou fileté (53), correspondant aux extrémités respectives (61, 62) de l'arbre de butée (6), qui a une longueur telle que, avec l'extrémité (62) vissée dans le trou (53) du positionneur correspondant (5) et l'extrémité opposée (61) couplée dans le trou borgne (52) de l'autre positionneur (5), le montage du dispositif peut entrer dans le corps du clapet (1) en glissant, tandis que, au moment de dévisser légèrement l'extrémité (62) de l'arbre de butée (6), il exerce une pression sur les deux positionneurs (5), en les appuyant contre les creux correspondants (12) du corps du clapet.

2. Clapet anti-retour oscillant à double battant, selon la revendication 1, **caractérisé en ce que** les positionneurs (5) ont une zone rugueuse usinée (54) sur la face externe, qui reste dans la zone de contact avec les creux (12), qui garantit le serrage de ces derniers au corps (1) lorsque l'arbre de butée (6) est dévissé et qu'il appuie les positionneurs (5) contre les creux du corps (1).
